# EUROPÄISCHE PATENTSCHRIFT

(11) **EP 3 327 735 B1**
(45) Veröffentlichungstag und Bekanntmachung des Hinweises auf die Patenterteilung: **07.08.2019**
(21) Anmeldenummer: 17204147.7
(22) Anmeldetag: 28.11.2017
(51) Int. Cl.: H01F 7/02, F16B 12/14

(54) **MAGNETEINRICHTUNG**
MAGNET DEVICE
DISPOSITIF MAGNÉTIQUE

(30) Priorität: 28.11.2016 DE 102016122872
(43) Veröffentlichungstag der Anmeldung: 30.05.2018
(73) Patentinhaber: Polenz, Jürgen, 59348 Lüdinghausen (DE)
(72) Erfinder: Polenz, Jürgen, 59348 Lüdinghausen (DE)
(74) Vertreter: Schulte & Schulte

(56) Entgegenhaltungen:
- DE-A1- 19 807 663
- DE-A1-102009 060 456

## Beschreibung

Die Erfindung betrifft eine Magneteinrichtung gemäss Oberbegriff von Anspruch 1.

Die Erfindung betrifft außerdem eine Einrichtungsteil gemäss Oberbegriff von Anspruch 2.

Derartige Magneteinrichtungen werden zum Arretieren eines Bauteils auf oder an einem anderen oder einem Untergrund eingesetzt. Eine solche Magneteinrichtung ist beispielsweise aus der DE 10 2007 028 560 B4 bekannt. Dabei dient hier eine derartige Magneteinrichtung zum Festsetzen von Schalungselementen für Betonteile auf einer ferromagnetischen Schalungsunterlage. Die Magneteinrichtung ist über eine Hubeinrichtung in eine Gebrauchsstellung und in eine Nichtgebrauchsstellung zu bewegen und zwar in einem dafür vorgesehenen Gehäuse, wobei in der Nichtgebrauchsstellung seitlich ausfahrbare Halteelemente für einen Kraft- und Formschluss sorgen, um so die eingesetzte Hubeinrichtung zu entlasten in einem Abstand, wo die magnetischen Kräfte sich nicht bemerkbar machen. Aus der DE 10 2009 060 456 A1 ist ein sogenanntes Verbindungsmittel bzw. eine Art Magneteinrichtung bekannt, bei der mit Hilfe eines Magnetantriebswerkzeuges ohne direkte Berührung der in einem Schutzgehäuse angeordnete Arretierstößel in Achsrichtung so verfahren wird, dass damit ein Bauteil mit dem anderen verbunden werden kann. Das Magnetantriebswerkzeug und der Arretierstößel bzw. sein Führungsstift sind mit Magneten bestückt, die sich gegeneinander abstoßend angeordnet und damit das benachbarte Bauteil in gegensätzliche Drehbewegung versetzend ausgebildet sind. Ähnlich aufgebaut ist ein sogenanntes Verbindungsmittel zum Verbinden zweier Bauteile gemäß EP 1 056 953 B1 und DE 198 07 663 A1. Die bekannten Magneteinrichtungen, insbesondere nach der DE 10 2009 060 456 A1 haben den Nachteil, dass mit einem ringförmigen diametral magnetisierten Magneten gearbeitet wird, der dem Arretierstößel zugeordnet ist. Ein derartiges Magnetteil verfügt dementsprechend über eine hälftig positive und eine hälftig negative Oberfläche, sodass ein gleichmäßiger, von der Drehung her ungestörter Betrieb eines derartigen Arretierstößels mit Führungsstift nicht möglich ist. Vielmehr muss in Kauf genommen werden, dass bei einem Wechsel der Oberflächenhälfte beim Drehen des Magnetantriebswerkzeuges zunächst einmal nicht die notwendigen Abstoßungskräfte wirksam werden, sondern vielmehr ein leichtes Rückdrehen des Führungsstiftes oder auch die des Stößels eintritt. Nachteilig ist außerdem, dass auch die Drehbewegung zum beispielsweise Verbinden eines Bauteiles mit einem anderen bzw. zum Lösen nicht nur nicht kontinuierlich erfolgen kann, sondern auch nur mit begrenzter Geschwindigkeit. Nachteilig ist schließlich, dass ein derartig hergestelltes Magnetteil nur mit einem verhältnismäßig hohen Arbeitsaufwand hergestellt werden kann.

Der Erfindung liegt daher die Aufgabe zugrunde, eine derartige Magneteinrichtung so auszubilden, dass ein leichtgängiger und gleichmäßiger Bewegungsvorgang des Arretierstößels möglich wird.

Die Aufgabe wird erfindungsgemäß durch die zusätzlichen Merkmale des kennzeichnenden Teils von Anspruch 1 bzw. 2 gelöst.

Mit einer derart ausgebildeten Magneteinrichtung ist es möglich, einen annähernd gleichförmigen Drehbetrieb für den Arretierstößel und den Führungsstift zu erreichen, weil der für die Drehbewegung notwendige Abstoßeffekt durch die wechselnd dicht nebeneinanderliegenden Oberflächen der Stabmagnete quasi in schnellem Wechsel zur Verfügung stehen, sodass ein annähernd kontinuierlicher Dreheffekt erreichbar ist. Dieser Dreheffekt ist letztlich von der Zahl bzw. der Dichte der Stabmagnete abhängig. Weiter kann mit einfach herzustellenden und optimaler arbeitenden Stabmagneten gearbeitet werden. Die Stabmagnete sind mit der Trennschichtebene zur Mittenachse des Führungsstiftes zeigend angeordnet. Damit weist in schneller Abfolge jeweils wechselnd eine Nordpol- und eine Südpolseite zum Antriebsmagnetteil und sorgt dafür, dass zusammenwirkend mit dem dort angeordneten Antriebsmagneten annähernd kontinuierlich der Abstoßeffekt erzeugt wird. Die Anordnung der Mittenachse bringt in schneller Abfolge den Wechsel zwischen Nord- und Südpolseite.

Ein zumindest annähernd gleichförmiger Drehbetrieb für den Arretierstößel und den Führungsstift wird erreicht, weil der für die Drehbewegung notwendige Abstoßeffekt durch die wechselnd dicht nebeneinanderliegenden Oberflächen der Stabmagnete quasi in schnellem Wechsel zur Verfügung stehen, sodass ein annähernd kontinuierlicher Dreheffekt erreichbar ist. Dieser vorzugsweise über ein externes Antriebswerkzeug ausgeübte Dreheffekt ist letztlich von der Zahl bzw. der Dichte der Stabmagnete abhängig. Ein solches Antriebswerkzeug verfügt über ein das Magnetteil des Arretierstößels magnetisch beeinflussendes Antriebsmagnetteil. Weiter kann mit einfach herzustellenden und optimal arbeitenden Stabmagneten gearbeitet werden.

Nach einer zweckmäßigen Ausführungsform der Erfindung ist vorgesehen, dass das Antriebsmagnetteil einen mit mehreren im Abstand zueinander angeordneten Antriebsmagneten bestückten Magnetträger aufweist, der die Antriebsmagnete annähernd linear dicht am Schutzgehäuse vorbeiführend angeordnet und ausgebildet ist. Ein derartig langgestrecktes Antriebsmagnetteil verfügt somit über eine entsprechend große Anzahl von Antriebsmagneten, sodass ähnlich wie beim entsprechend ausgebildeten erfindungsgemäßen Magnetteil des anderen Einrichtungsteiles schnell wechselnd Nord- und Südpol aufweisende Antriebsmagnete vor den Nord- bzw. Südteil aufweisenden Stabmagneten stehen und somit den gewünschten und notwendigen Abstoßeffekt erzeugen, der die Drehbewegung erbringt.

Zweckmäßigerweise ist die Magneteinrichtung so ausgebildet, dass die Stabmagnete eine gemeinsame Umlaufbahn ergebend ausgebildet und mit dem Führungsstift verbunden sind. Die Stabmagnete ergeben somit eine Art ringförmiges Magnetteil, nur dass durch die Verwendung der Stabmagnete nun das abwechselnde Wirksamwerden der Nord- und Südpolteile wesentlich schneller erfolgt, als beim Stand der Technik.

Eine besonders sichere und genaue Anordnung der Stabmagnete und insbesondere deren Trennschichtebene wird gemäß der Erfindung dadurch erreicht, dass die Stabmagnete in Einbuchtungen in den Führungsstift eingefügt sind. Diese einmal vorgegebene Position kann so leicht eingehalten werden und es ergibt sich eine gleichmäßige Umlaufbahn, die einen geringen Abstand zur Innenseite des Schutzgehäuses aufweisen kann.

Je nach Aufbau und Größe der Magneteinrichtung ist es von Vorteil, wenn das Magnetteil aus drei bis zwölf, vorzugsweise sechs Stabmagneten zusammengesetzt ist, wobei für den hier vorgesehenen Einsatzfall mit dem gewünschten Drehen von Führungsstift und Stabmagneten sich die Sechser-Einteilung als besonders zweckmäßig erwiesen hat.

Um die gewünschte Kontinuität bzw. Gleichförmigkeit der Drehbewegung sicherzustellen, ist es von Vorteil, wenn die sechs Stabmagnete auf der Umlaufbahn im Abstand von 0 bis 10 mm zueinander am Führungsstift festgelegt sind. Da die Herstellung der besagten Stabmagnete einfacher und preiswerter ist, als die eines Ringmagneten, kann eine deutlich bessere Wirkungsweise mit den sechs Stabmagneten erreicht werden, auch wenn ein Abstand von beispielsweise 10 mm zwischen ihnen gewählt werden sollte.

Weiter vorne ist davon gesprochen worden, dass ein gleichförmiges Drehen des Arretierstößels und des Führungsstiftes mit Ziel der Erfindung ist, wobei dies dadurch noch leichter erreicht werden kann, wenn der Arretierstößel im Übergang zum Führungsstift ein Außengewinde aufweist, das mit einem Innengewinde des Schutzgehäuses korrespondierend ausgebildet ist, wobei das Innengewinde und/oder das Außengewinde eine vorteilhafte Leichtgängigkeit ergebend größere Toleranzen oder glattgewalzte Oberflächen aufweisen. Mit diesen Maßnahmen beim Herstellen der Gewinde ist zwar ein etwas größerer Aufwand verbunden, bei dem hier vorgesehenen Einsatz aber die Sicherheit gegeben, dass es nicht zum Stocken und zum Festsetzen vom Arretierstößel bzw. Führungsstift im Schutzgehäuse kommen kann. Vorteilhaft ist weiter, dass so auch die Leichtgängigkeit der Drehbewegung gezielt beeinflusst wird.

Die bereits erwähnten Antriebsmagnete, die auf dem Magnetträger angeordnet sind, sollen die Stabmagnete gezielt beeinflussen, was insbesondere günstig und sicher dadurch möglich ist, dass die Antriebsmagnete als axial magnetisierte Scheiben- oder Quadermagnete ausgebildet und mit den Nord-/Südpolen jeweils wechselnd mit dem Magnetträger verbunden sind. Damit weisen sie abwechselnd eine Nordpoloberfläche bzw. Südpoloberfläche auf und können bei gezielt eingestelltem Abstand zwischen den einzelnen Antriebsmagneten die Gleichförmigkeit der Bewegung von Führungsstift und Magnetteil mit den Stabmagneten sicherstellen. Vorteilhaft ist dabei weiter, dass mit relativ preiswerten axial magnetisierten Magneten gearbeitet werden kann, die beispielsweise an den Magnetträger angeklebt oder sonst wie mit diesem verbunden sind.

Gemäß einer Ausführung der Erfindung ist sichergestellt, dass der Magnetträger die axial magnetisierten Scheiben- oder Quadermagnete dicht am Schutzgehäuse mit Arretierstößel und Führungsstift vorbeiführt. Die Einwirkungszeit kann noch dadurch etwas erhöht und damit die Gleichförmigkeit der Bewegung noch weiter optimiert werden, dass der Magnetträger im Bereich des Schutzgehäuses zum gegenüberliegenden Magnetträger hin in einem leichten Bogen geführt ist, wobei der Magnetträger zweckmäßigerweise um zwei im Abstand angeordnete Drehachsen herumgeführt wird, sodass einmal der Magnetträger mit dem einen Bereich und dann mit dem anderen Bereich gegenüber dem angetriebenen Bauteil wirksam werden kann.

Die Erfindung zeichnet sich insbesondere dadurch aus, dass eine Magneteinrichtung geschaffen ist, die sehr leichtgängig ausgebildet ist und durch geschickte Anordnung einmal der Stabmagnete zur angetriebenen Seite hin und auch vorzugsweise der axial magnetisierten Scheiben- oder Quadermagnete einen gleichmäßigen Bewegungsvorgang sicherstellen. Je nach Anzahl der das Magnetteil des angetriebenen Teils bildenden Stabmagnete bzw. der den Antriebsteil bildenden axial magnetisierten Scheiben- oder Quadermagnete, ist die Schnelligkeit und Gleichförmigkeit der Bewegung beim Einbringen der Arretiereinrichtung oder beim Lösen der Arretiereinrichtung zu beeinflussen. Vorteilhaft ist neben der Gleichförmigkeit des Bewegungsablaufes auch, dass die Drehrichtung kontinuierlich eingehalten werden kann, also ein Wechsel nicht mehr erfolgen kann bzw. muss. Darüber hinaus werden Bauteile eingesetzt, wie vor allem die Stabmagnete, die von der Herstellung her günstiger und vom Einsatz her letztlich praktischer sind.

Weitere vorteilhafte Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Figur 1: eine Draufsicht auf eine Magneteinrichtung mit dem Antriebswerkzeug und dem angetriebenen Einrichtungsteil,
- Figur 2: das angetriebene Einrichtungsteil im Schnitt,
- Figur 3: das angetriebene Einrichtungsteil in Detailansicht und
- Figur 4: einen Einsatzfall eines derart angetriebenen Einrichtungsteils.

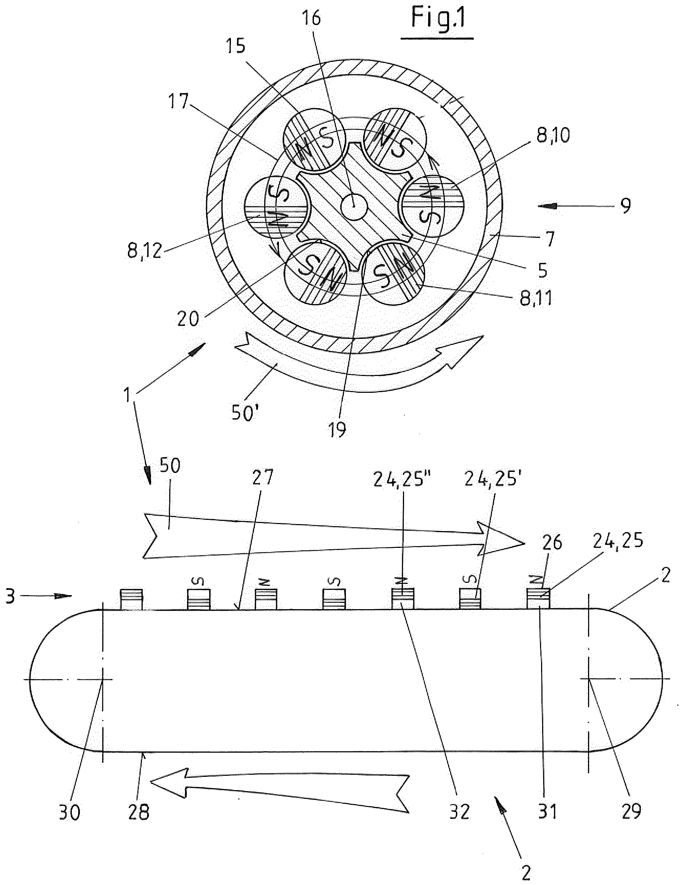

Figur 1 zeigt teilweise im Querschnitt, teilweise in Draufsicht eine Magneteinrichtung 1 mit dem Antriebswerkzeug 2 und dem angetriebenen Einrichtungsteil 9. Beim Einrichtungsteil 9 sind die den Führungsstift 5 umgebenden und damit auf den Arretierstößel 4 einwirkenden Stabmagnete 10, 11, 12 gezeigt, die zusammen das ringförmige Magnetteil 8 bilden.

Die gezeigten Stabmagnete 10, 11, 12 sind so angeordnet und mit dem Führungsstift 5 verbunden, dass ihre Trennschichtebene 15 in Achsrichtung 6 zeigen. Die einzelnen Stabmagnete 10, 11, 12 sind in Einbuchtungen 19, 20 in den Führungsstift 5 eingesetzt und festgelegt. Sie bilden eine Umlaufbahn 17 um die Mittenachse 16.

Im unteren Teil der Figur 1 ist das Antriebswerkzeug 2 wiedergegeben, das über ein Antriebsmagnetteil 3 verfügt, welches in der hier wiedergegebenen Ausführung aus einer Mehrzahl von als Scheibenmagneten 25 ausgebildeten Antriebsmagneten besteht. Diese Antriebsmagnete 24 sind so angeordnet, dass jeweils wechselnd ein Nordpol 26 bzw. ein Südpol 31 auf die dem angetriebenen Einrichtungsteil 9 zugeordneten Stabmagnete 10, 11, 12 einwirkt. Diese Vielzahl von Antriebsmagneten 24 in Form der Scheibenmagnete 25 ist mit einem Magnetträger 27 verbunden, der um die Drehachsen 29, 30 herumgeführt wird und damit eine kontinuierliche Einwirkung auf die Stabmagnete 10, 11, 12 bewirkend ausgebildet ist. Die beiden Längsseiten können aufgrund der Ausbildung der Drehachsen 29, 30 jeweils parallel zueinander geführt und die ihnen zugeordneten Scheibenmagneten 25 beeinflussen somit die Nord- und Südpole der Stabmagnete 10, 11, 12 annähernd kontinuierlich, was zu einer kontinuierlichen Bewegung in der gleichen Richtung führt, was durch die Pfeile 50 und 50' verdeutlicht ist.

Die einzelnen, das ringförmige Magnetteil 8 ergebenden Stabmagnete 10, 11, 12 sind in einem rohrförmigen Schutzgehäuse 7 untergebracht, was dem oberen Teil der Figur 1 zu entnehmen ist. Die dem Magnetträger 27 und der gegenüberliegenden Bahn 28 zugeordneten Scheibenmagnete 25, die als Antriebsmagnete 24 dienen, sind wie erwähnt axial magnetisiert und weisen damit die parallel zum Magnetträger 27 ausgebildete Trennschichtebene 32 auf.

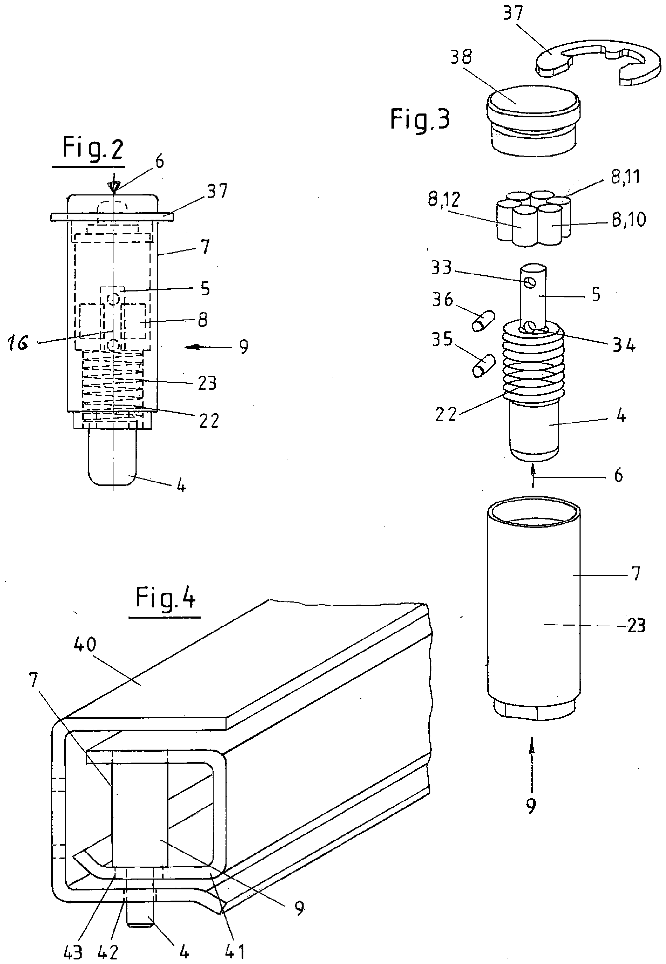

Figur 2 zeigt das angetriebene Einrichtungsteil 9 im Längsschnitt, wobei deutlich wird, dass im rohrförmigen Schutzgehäuse 7 eine Innenbohrung mit Innengewinde 23 ausgebildet ist, das mit dem Außengewinde 22 am Führungsstift 5 korrespondiert. Diese beiden Gewinde 22, 23 sind mit größeren Toleranzen bzw. mit glattgewalzter Oberfläche ausgebildet, um so die Leichtgängigkeit beim Einziehen und Herausfahren des Arretierstößels zu erleichtern.

Figur 3 zeigt die einzelnen Bauteile des angetriebenen Einrichtungsteils 9 im auseinandergezogenen Zustand. Mit 7 ist das Schutzgehäuse bezeichnet, in das das Bauteil aus Führungsstift 5 und Arretierstößel 4 bestehend eingeführt werden kann. Auf den Führungsstift 5 wird in Achsrichtung 6 das ringförmige Magnetteil 8 aufgeschoben, das hier aus sechs Stabmagneten 10, 11, 12 zusammengesetzt ist. Eine Festlegung auf dem Führungsstift 5 erfolgt über die Bohrungen 33, 34 und die darin einführbaren Einschlagbolzen 35, 36. Mit dem Sprengring 37 wird der Deckel 38 auf dem Schutzgehäuse 7 festgesetzt, sodass damit die aus Figur 2 ersichtliche Baueinheit entsteht.

Figur 4 zeigt einen Anwendungsfall der Magneteinrichtung 1, bei der das angetriebene Einrichtungsteil 9 wiedergegeben ist, das einem Doppel-T-Träger 41 zugeordnet ist, der über dieses Einrichtungsteil 9 wirksam mit dem äußeren Doppel-T-Träger 40 gekoppelt werden kann. Die gewünschte Arretierung kann noch optimiert werden, wenn im Abstand zu dem angetriebenen Einrichtungsteil 9 ein umgekehrt eingesetztes Einrichtungsteil 9 montiert wird, um so ein Verschieben der Doppel-T-Träger 40, 41 ineinander zu verhindern. Diese Doppel-T-Träger 40, 41 verfügen zum Aufnehmen des Arretierstößels 4 über Trägerbohrungen 42, 43.

## Patentansprüche

1. Magneteinrichtung bestehend aus einem Antriebswerkzeug (2) und einem darüber magnetisch beeinflussbaren, in einem Schutzgehäuse (7) angeordneten und einen Führungsstift (5) aufweisenden Arretierstößel (4), der in seiner Längsachsrichtung (6) per Drehung verschiebbar ist und an dessen zusammen mit diesem drehbaren Führungsstift (5) ein ringförmiges, diametral magnetisiertes Magnetteil (8) festgelegt ist, wobei das Antriebswerkzeug (2) als ein Teil der Magneteinrichtung über ein das Magnetteil (8) magnetisch beeinflussendes Antriebsmagnetteil (3) verfügt, wobei das Schutzgehäuse (7) zusammen mit dem Arretierstößel (4), dem Führungsstift (5) und dem Magnetteil (8) ein anderes Teil der Magneteinrichtung bildet, **dadurch gekennzeichnet,**
**dass** um den Führungsstift (5) herum, mehrere als das Magnetteil (8) dienende, diametral magnetisierte Stabmagnete (10, 11, 12) angeordnet am Führungsstift (5) festgelegt und mit ihrer jeweiligen Trennschichtebene (15) zwischen dem jeweiligen Nord- und Südpol (N/S) zur Mittenachse (16) des Führungsstifts (5) zeigend und in der Mittenachsrichtung (6) verlaufend angeordnet sind, sowie vom Antriebsmagnetteil (3) wechselnd beeinflussbar sind.

2. Einrichtungsteil (9), bestehend aus einem Schutzgehäuse (7) und einem in dem Schutzgehäuse (7) angeordneten und in seiner Längsachsrichtung (6) per Drehung verschiebbaren Arretierstößel (4) mit Führungsstift (5), wobei auf den zusammen mit dem Arretierstößel drehbaren Führungsstift (5) ein ringförmiges, diametral magnetisiertes Magnetteil (8) festgelegt ist, das über ein externes Antriebsmagnetteil (3) magnetisch beeinflussbar ausgebildet ist, **dadurch gekennzeichnet,**
**dass** um den Führungsstift (5) herum, mehrere als das Magnetteil (8) dienende, diametral magnetisierte Stabmagnete (10, 11, 12) angeordnet am Führungsstift (5) festgelegt und mit ihrer jeweiligen Trennschichtebene (15) zwischen dem jeweiligen Nord- und Südpol (N/S) zur Mittenachse (16) des Führungsstifts (5) zeigend und in der Mittenachsrichtung (6) verlaufend angeordnet sind, sowie von dem externen Antriebsmagnetteil (3) wechselnd beeinflussbar sind.

3. Magneteinrichtung nach Anspruch 1,
**dadurch gekennzeichnet,**
**dass** das Antriebsmagnetteil (3) einen mit mehreren im Abstand zueinander angeordneten Antriebsmagneten (24) bestückten Magnetträger (27, 28) aufweist, der die Antriebsmagnete (24) annähernd linear dicht am Schutzgehäuse (7) vorbeiführend angeordnet und ausgebildet ist.

4. Magneteinrichtung nach Anspruch 1,
**dadurch gekennzeichnet,**
**dass** die Stabmagnete (10, 11, 12) eine gemeinsame Umlaufbahn (17) um die Mittenachse (16) ergebend ausgebildet und mit dem Führungsstift (5) verbunden sind.

5. Magneteinrichtung nach Anspruch 1,
**dadurch gekennzeichnet,**
**dass** die Stabmagnete (10, 11, 12) in Einbuchtungen (19, 20) in den Führungsstift (5) eingefügt sind.

6. Magneteinrichtung nach Anspruch 1,
**dadurch gekennzeichnet,**
**dass** das Magnetteil (8) aus drei bis zwölf, vorzugsweise sechs genannten Stabmagneten (10, 11, 12) zusammengesetzt ist.

7. Magneteinrichtung nach Anspruch 6, in Abhängigkeit von Anspruch 4, **dadurch gekennzeichnet,**
**dass** die sechs Stabmagnete (10, 11, 12) auf der Umlaufbahn (17) im Abstand von 0 bis 10 mm zueinander am Führungsstift (5) festgelegt sind.

8. Magneteinrichtung nach Anspruch 1,
**dadurch gekennzeichnet,**
**dass** der Arretierstößel (4) im Übergang zum Führungsstift (5) ein Außengewinde (22) aufweist, das mit einem Innengewinde (23) des Schutzgehäuses (7) korrespondierend ausgebildet ist, wobei das Innengewinde (23) und/oder das Außengewinde (22) eine vorteilhafte Leichtgängigkeit ergebend größere Toleranzen oder glattgewalzte Oberflächen aufweisen.

9. Magneteinrichtung nach Anspruch 3,
**dadurch gekennzeichnet,**
**dass** die Antriebsmagnete (24) als axial magnetisierte Scheiben- (25) oder Quadermagnete ausgebildet und mit den Nord-/Südpolen (26, 31)jeweils wechselnd mit dem Magnetträger (27) verbunden sind.

## Claims

1. Magnet device consisting of a drive tool (2) and a magnetically influenceable locking ram (4) above this located in a protective housing (7) and having a guide pin (5) that is adjustable in the direction of its longitudinal axis (6) by rotating and to which together with this rotatable guide pin (5) a circular diametrally magnetised magnet part (8) is fixed, whereby the drive tool (2) has a drive magnet part (3) that influences the magnet part (8) as part of the magnet device, whereby the protective housing (7) together with the locking ram (4), the guide pin (5) and the magnet part (8) forms another part of the magnet device,
**characterised in that**
several diametrally magnetised rod magnets (10, 11, 12) serving as the magnet part (8) are positioned around the guide pin (5) fixed at the guide pin (5) and showing with their respective separating layer plane (15) between the respective north and south pole (N/S) towards the central axis (16) of the guide pin (5) and are arranged running in the direction of the central axis (6), and alternately influenceable by the drive magnet part (3).

2. Set-up part (9), consisting of a protective housing (7) and a locking ram (4) with guide pin (5) located in the protective housing (7) and adjustable in the direction of its longitudinal axis (6) by rotating whereby a circular diametrally magnetised magnet part (8) is fixed on the guide pin (5) that is rotatable together with the locking ram that is designed to be magnetically influenced through an external drive magnet part (3),
**characterised in that**
several diametrally magnetised rod magnets (10, 11, 12) serving as the magnet part (8) are positioned around the guide pin (5) fixed at the guide pin (5) and showing with their respective separating layer plane (15) between the respective north and south pole (N/S) towards the central axis (16) of the guide pin (5) and are arranged running in the direction of the central axis (6), and alternately influenceable by the drive magnet part (3).

3. Magnet device according to claim 1,
**characterised in that**
the drive magnet part (3) has a magnet holder (27, 28) equipped with drive magnets (24) positioned at a distance from each other that is positioned and designed to lead the drive magnets (24) as closely as possible past the protective housing (7).

4. Magnet device according to claim 1,
**characterised in that**
the rod magnets (10, 11, 12) are designed to result in a common orbit (17) around the central axis (16) and are connected to the guide pin (5).

5. Magnet device according to claim 1,
**characterised in that**
the rod magnets (10, 11, 12) are inserted into recesses (19, 20) in the guide pin (5).

6. Magnet device according to claim 1,
**characterised in that**
the magnet part (8) consists of three to twelve, preferably six so-called rod magnets (10, 11, 12).

7. Magnet device according to claim 6, in dependence on claim 4,
**characterised in that**
the six rod magnets (10, 11, 12) are fixed to the guide pin (5) on the orbit (17) at a distance of 0 to 10 mm to each other.

8. Magnet device according to claim 1,
**characterised in that**
the locking ram (4) has an outer thread (22) at the transition to the guide pin (5) that is designed correspondingly to an internal thread (23) of the protective housing (7), whereby the internal thread (23) and/or the outer thread (22) has greater tolerances or flat-rolled surfaces resulting in an advantageous ease of movement.

9. Magnet device according to claim 3,
**characterised in that**
the drive magnets (24) are designed as axially magnetised disc (25) or block magnets and are connected to the magnet holder (27) alternating with the north/south poles (26, 31).

## Revendications

1. Dispositif d'aimant consistant en un outil d'entraînement (2) et un poussoir d'arrêt (4) magnétiquement influençable placé au-dessus, disposé dans un boîtier de protection (7) et présentant une tige de guidage (5) pouvant être déplacée par rotation dans le sens de son axe longitudinal (6), et sur lequel est fixée, en même temps que la tige de guidage (5) rotative, une pièce magnétique (8) en forme d'anneau diamétralement magnétisée, sachant que l'outil d'entraînement (2) dispose, en tant que partie intégrante du dispositif d'aimant, d'une pièce magnétique d'entraînement (3) influençant magnétiquement la pièce magnétique (8), sachant que le boîtier de protection (7) forme une autre partie du dispositif d'aimant avec le poussoir d'arrêt (4), la tige de guidage (5) et la pièce magnétique (8),
**caractérisé par le fait**
**qu'**autour de la tige de guidage (5) sont disposés plusieurs aimants en forme de tige (10, 11, 12), servant la pièce magnétique (8), diamétralement magnétisés et fixés sur la tige de guidage (5), et orientés au niveau de leur plan de couche séparatrice (15) respective situé entre leur pôle nord et leur pôle sud (N/S) vers l'axe médian (16) de la tige de guidage (5), disposés en suivant le sens de l'axe médian (6) et pouvant être influencés de façon changeante par la pièce magnétique d'entraînement (3).

2. Pièce de dispositif (9), consistant en un boîtier de protection (7) et un poussoir d'arrêt (4) avec tige de guidage (5) disposé dans le boîtier de protection (7) et pouvant être déplacé par rotation dans le sens de son axe longitudinal (6), sachant que sur la tige de guidage (5) rotative avec le poussoir d'arrêt est fixée une pièce magnétique (8) en forme d'anneau diamétralement magnétisée, qui est conçue de façon à pouvoir être influencée magnétiquement à l'aide d'une pièce magnétique d'entraînement (3) externe,
**caractérisé par le fait**
**qu'**autour de la tige de guidage (5) sont disposés plusieurs aimants en forme de tige (10, 11, 12), servant la pièce magnétique (8), diamétralement magnétisés et fixés sur la tige de guidage (5), et orientés au niveau de leur plan de couche séparatrice (15) respective situé entre leur pôle nord et leur pôle sud (N/S) vers l'axe médian (16) de la tige de guidage (5), disposés en suivant le sens de l'axe médian (6) et pouvant être influencés de façon changeante par la pièce magnétique d'entraînement (3).

3. Dispositif d'aimant selon la revendication 1,
**caractérisé par le fait**
**que** la pièce magnétique d'entraînement (3) présente un porte-aimants (27, 28) équipé de plusieurs aimants d'entraînement (24) disposés à une certaine distance l'un de l'autre, lequel est disposé et conçu de façon presque linéaire très près du boîtier de protection (7) en passant à côté des aimants d'entraînement (24).

4. Dispositif d'aimant selon la revendication 1,
**caractérisé par le fait**
**que** les aimants en forme de tige (10, 11, 12) sont conçus de manière à former une orbite commune (17) autour de l'axe médian (16) et sont reliés à la tige de guidage (5).

5. Dispositif d'aimant selon la revendication 1,
**caractérisé par le fait**
**que** les aimants en forme de tige (10, 11, 12) sont insérés dans des échancrures (19, 20) de la tige de guidage (5).

6. Dispositif d'aimant selon la revendication 1,
**caractérisé par le fait**
**que** la pièce magnétique (8) se compose de trois à douze, de préférence six aimants en forme de tige (10, 11, 12) tels qu'indiqués.

7. Dispositif d'aimant selon la revendication 6, en fonction de la revendication 4,
**caractérisé par le fait**
**que** les six aimants en forme de tige (10, 11, 12) sur l'orbite (17) sont fixés sur la tige de guidage (5), à une distance comprise entre 0 et 10 mm les uns des autres.

8. Dispositif d'aimant selon la revendication 1,
**caractérisé par le fait**
**que** le poussoir d'arrêt (4) présente, au niveau de la transition vers la tige de guidage (5), un filetage extérieur (22) qui est conçu de manière à correspondre à un filetage intérieur (23) du boîtier de protection (7), sachant que ce filetage intérieur (23) et/ou le filetage extérieur (22) présente des tolérances assez grandes ou des surfaces laminées lisses procurant un mouvement fluide avantageux.

9. Dispositif d'aimant selon la revendication 3,
**caractérisé par le fait**
**que** les aimants d'entraînement (24) sont conçus sous la forme d'aimants en rondelles magnétisés dans le sens axial (25) ou bien des aimants parallélépipédiques reliés aux pôles nord et sud (26, 31) avec le porte-aimants (27) en changeant à chaque fois.
